# EUROPEAN PATENT SPECIFICATION

(11) **EP 3 915 739 B1**
(45) Date of publication and mention of the grant of the patent: **30.11.2022**
(21) Application number: 20179904.6
(22) Date of filing: 15.06.2020
(51) Int. Cl.: B26B 19/44

(54) **PET SHAVER**
HAUSTIERRASIERER
RASOIR POUR ANIMAUX DE COMPAGNIE

(30) Priority: 27.05.2020 CN 202010464185
(43) Date of publication of application: 01.12.2021
(73) Proprietor: Shenzhen Zhongdaxin Epoxy Plate Co. Ltd., Shenzhen (CN)
(72) Inventor: Huang, Shengwen, Anxiang County, Hunan (CN)
(74) Representative: Sach, Greg Robert

(56) References cited:
- DE-U1-202010 011 023
- GB-A- 803 610
- US-A- 2 748 472
- US-B2- 7 076 878

## Description

### TECHNICAL FIELD

The present invention relates to the technical field of a pet shaver, and particularly to a pet shaver capable of collecting shaved pet hair while shaving.

### BACKGROUND

Existing pet shavers usually require manual operation. The shaved pet hair is easily scattered to other places. It is not easy to collect shaved pet hair, which may affect residential hygiene and affect the physical health of people.

US2748472 discloses a vacuum operated hair removing attachment for hair clippers. The hair clipper attachment includes an outer section 10 and an inner section 12. The inner section 12 includes an outer end portion 22. An air passage 40 is defined between the outer section 10 and the outer end portion 22 and is configured to guide removed air out through a horse 10. A chamber 42 is defined between the portion 22 and the upper surface of the clipper 30 to accommodate electronic components including a motor. The outer end portion 22 defines an opening 36 and the upper surface of the clipper 30 defines an opening 38, therefore, air can enter the chamber 42 through the opening 38 to cool the motor and then enter the air passage 40 through the opening 36. The hair clipper attachment is in a complicated structure. In addition, removed air may enter the chamber 42 through the opening 36.

Therefore, it is necessary to provide a pet shaver capable of collecting shaved pet hair while shaving pets. The pet shaver is in a simplified structure. The air duct have a sealed structure other than two openings at both ends thereof, therefore, removed air cannot enter the accommodating space of the outer shell.

### SUMMARY

The object of the present invention is to provide a pet shaver to solve the problems mentioned in the background.

To achieve the above object, the present invention provides the following technical solutions:

a pet shaver, comprising an outer shell, an air duct and a connecting device, wherein the outer shell has an accommodating space, a bottom end of the outer shell is connected to the connecting device, the air duct is accommodated in the connecting device, and the air duct is communicated with the connecting device.

Preferably, the outer shell comprises an upper shell and a lower shell, the upper shell is connected to the lower shell, and the upper shell and the lower shell are combined to form an accommodating space.

Preferably, the bottom end of the upper shell has an opening, and in the assembled state, the bottom end of the air duct is communicated with the opening.

Preferably, the air duct and the upper shell are of an integrated structure.

Preferably, the connecting device comprises an abutment plate and a connecting part connected to the abutment plate, the abutment plate is abutted against the outer shell, and the connecting part is connected with a vacuum cleaner.

Preferably, the abutment plate has a communication hole, the communication hole is provided corresponding to the opening at the bottom end of the upper shell in the assembled state, and the air duct is capable of being communicated with the connecting part through the communication hole and the opening at the bottom end of the upper shell.

Preferably, the pet shaver further comprises a cutter head module, a power module and a control module, wherein the control module is electrically connected to the power module, the power module is connected to the cutter head module through a transmission part and is capable of driving the cutter head module to move, and the cutter head module is provided at the top end of the outer shell and is close to the top end of the air duct.

Preferably, the pet shaver further comprises a power supply module, wherein the power supply module is electrically connected to the control module and provides electric energy to the pet shaver.

Preferably, the pet shaver further comprises a switch module, wherein the switch module is electrically connected to the control module.

The pet shaver provided by the present invention is capable of absorbing the shaved hair while shaving the pet, preventing a large amount of hair from scattering, and reducing the workload of the user. In addition, the pet shaver is simplified in structure.

### BRIEF DESCRIPTION OF THE DRAWINGS

FIG. 1 is a schematic diagram of an exploded structure of a pet shaver according to the present invention.
FIG. 2 is a schematic diagram of an assembly structure of a pet shaver shown in FIG. 1.
FIG. 3 is a schematic diagram of an assembly structure of a pet shaver shown in FIG. 1 from another perspective.
FIG. 4 is a schematic diagram of an electrical connection structure of a pet shaver shown in FIG. 1.

### DESCRIPTION OF THE EMBODIMENTS

The technical solutions in the embodiments of the present invention will be described clearly and completely in conjunction with the drawings in the embodiments of the present invention. It is obvious that the described embodiments are only a part of the embodiments of the present invention, rather than all the embodiments. Based on the embodiments of the present invention, all other embodiments obtained by those skilled in the art without creative labor fall within the protection scope of the present invention.

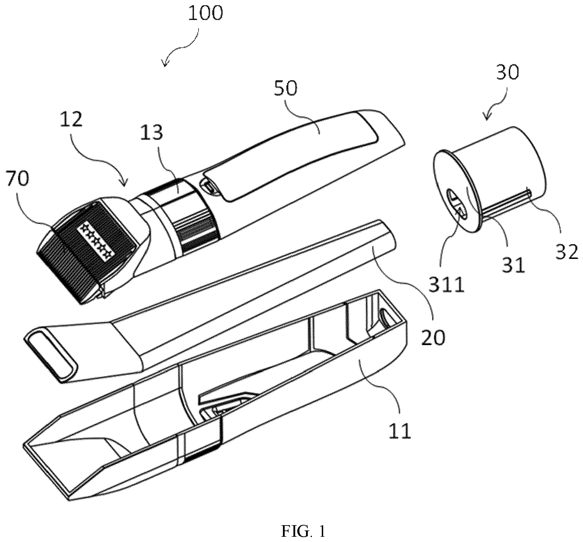

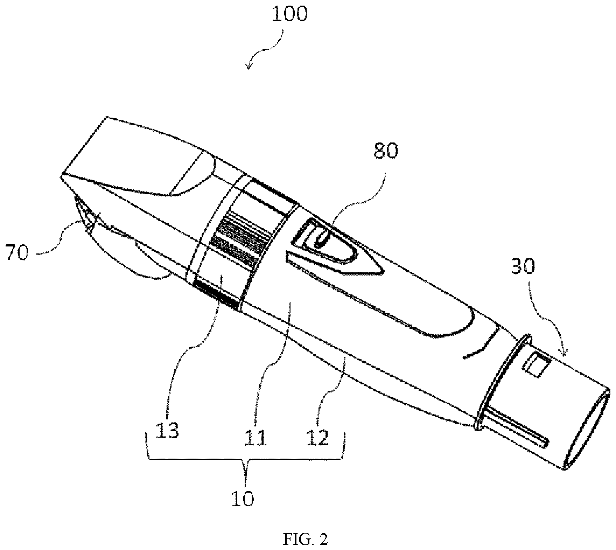

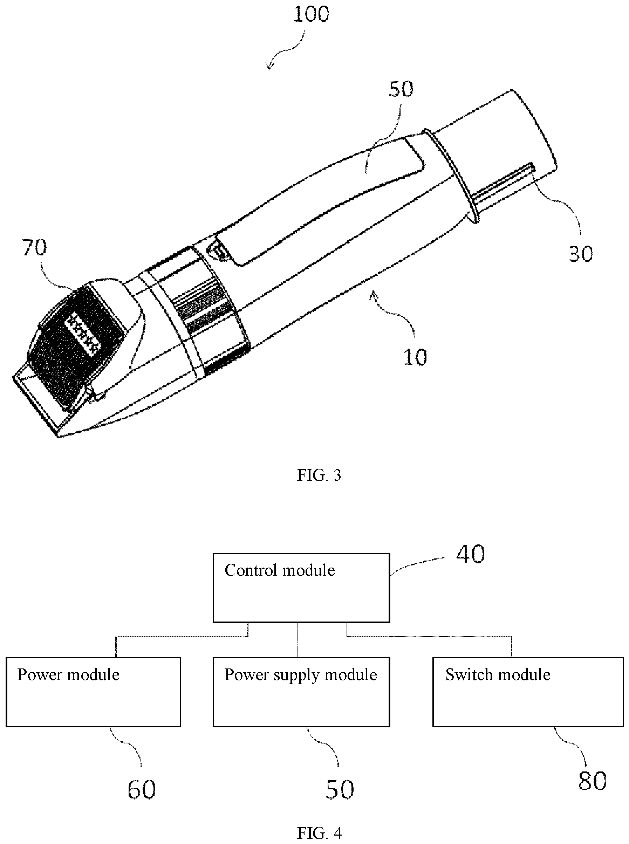

Refer to FIGS. 1-4 at the same time, wherein FIG. 1 is a schematic diagram of an exploded structure of a pet shaver according to the present invention; FIG. 2 is a schematic diagram of an assembly structure of a pet shaver shown in FIG. 1; FIG. 3 is a schematic diagram of an assembly structure of a pet shaver shown in FIG. 1 from another perspective; FIG. 4 is a schematic diagram of an electrical connection structure of a pet shaver shown in FIG. 1.

The pet shaver 100 comprises an outer shell 10, an air duct 20, a connecting device 30, a control module 40, a power supply module 50, a power module 60, a cutter head module 70, and a switch module 80. The outer shell 10 has an accommodating space, and the air duct 20, the control module 40, the power supply module 50 and the power module 60 are accommodated in the accommodating space. One end of the connecting device 30 is connected to the bottom end of the outer shell 10, and the other end thereof is connected to a vacuum cleaner. The cutter head module 70 is provided at the top end of the outer shell 10. The control module 40 is electrically connected to the power supply module 50, the power module 60 and the switch module 80, respectively.

The outer shell 10 comprises an upper shell 11, a lower shell 12 and a pattern adjusting component 13. The upper shell 11 and the lower shell 12 are combined to form an accommodating space. The pattern adjusting component 13 is sleeved on the outer shell 10. The outer shell 10 is generally of a quasi-cylindrical shape.

The upper housing 11 is generally of a semi-cylindrical shape. The bottom end of the upper shell 10 has an opening 111.

The lower shell 12 is combined and connected to the upper shell 11. Specifically, the upper shell 11 and the lower shell 12 are combined to form an accommodating space. The upper shell 11 and the lower shell 12 may be fixed by snapping or by screws, which is not limited in the present invention.

The pattern adjusting component 13 is provided in the middle of the outer shell 10. The pattern adjusting component 13 is connected to the cutter head module 70 through a transmission device (not shown), and can adjust the structure of the cutter head module 70 by adjusting the pattern adjusting component 13 so as to adjust the suitable pattern according to different types of pets.

The air duct 20 is provided in the outer shell 10. The inner part of the air duct 20 is communicated, and other parts other than openings at both ends have a sealed structure. In other words, the outer wall of the air duct 20 has a sealed structure. In the normal assembled state, the air duct 20 is accommodated in the accommodating space and is provided close to the upper shell 11. The top end thereof is close to the top end of the outer shell 10, and the width of the top thereof is adapted to the top end of the outer shell 10.

The bottom end of the air duct 20 passes through the opening 111 of the upper shell and is connected to the connecting device 30. In other words, the bottom end of the air duct 20 is communicated with the opening 111 of the upper shell. The air duct 20 may be a separate structure, or may be an integrated structure with the upper shell 11, which is not limited in the present invention. For convenience of description, the part of the accommodation space other than the air duct 20 is named as the main accommodation space.

One end of the connecting device 30 is connected to the vacuum cleaner, and the other end thereof is connected to the air duct 20 and is abutted against the outer shell 10 at the same time. The connecting device 30 comprises an abutment plate 31 and a connecting part 32. The abutment plate 31 is provided at the top end of the connecting part 32.

The connecting part 32 is configured to be connected with a vacuum cleaner. The vacuum cleaner may be an ordinary vacuum cleaner or a specially designed vacuum cleaner that can easily absorb pet hair. There are a plurality of connecting parts 32, and various types of different models can be set according to different types of vacuum cleaners, so as to adapt to various different vacuum cleaners. The structure of the connecting part 32 is a tubular structure.

The abutment plate 31 covers the connecting part 32. The abutment plate 31 has a flat sheet structure. The abutment plate 31 has a communication hole 311. The communication hole 311 is connected to the bottom end of the air duct 20, and realizes communication between the bottom end of the air duct 20 and the connecting part 32. In the assembled state, the communication hole 311 is corresponding to the opening 111 at the bottom end of the upper housing 11. Preferably, the communication hole 311 and the opening 111 have the same shape and are overlapped. The air duct 20 can be communicated with the connecting part through the communication hole 311 and the opening 111 at the bottom end of the upper shell 11.

The outer shell 10 is abutted against the abutment plate 31. Specifically, the bottom end of the upper shell 11 is abutted against the abutment plate 31; the bottom end of the lower shell 12 may be connected to the abutment plate 31 or may be spaced from the abutment plate 31 by a predetermined distance, which is not limited in the present invention.

The control module 40 is electrically connected to the power supply module 50, the power module 60, the cutter head module 70, and the switch module 80, respectively. The control module 40 can control the working state of the pet shaver 100 according to the received information.

The power supply module 50 is provided in the accommodating space. The power supply module 50 is electrically connected to the control module 40 and can provide electric energy to the electric appliance of the pet shaver 100. In this embodiment, the power supply module 50 is a lithium ion battery.

The power module 60 is electrically connected to the control module 40 and is connected to the cutter head module 70 through a transmission part (not shown). The working state of the power module 60 is controlled by the control module 40.

The cutter head module 70 is provided at the top end of the outer shell 10. Specifically, the cutter head module 70 is provided at the top end of the lower housing 10, and is connected to the power module 60 through a transmission part, and is driven to work by the power module 60. There may be also a plurality of cutter head modules 70.

The switch module 80 is provided on the outer shell 10. Specifically, the switch module 80 is provided on the surface of the upper shell 11. In addition, the switch module 80 is electrically connected to the control module 40. The switch module 80 not only can control the on/off of the pet shaver 100, but also control the working state and intensity of the pet shaver 100.

The vacuum cleaner is communicated with the air duct 20 through a pipeline, so that the pet hair can be absorbed. The vacuum cleaner may be an existing universal vacuum cleaner, which will not be described in detail in the present invention. In this embodiment, there may be a plurality of connecting devices 30. The specifications of the plurality of connecting devices 30 are different, so that it is convenient for the user to connect vacuum cleaners of different specifications.

In order to understand the working process of the pet shaver 100 more clearly, the working state of the pet shaver 100 will be described in detail below.

When it is necessary to shave pets, the pattern adjusting component 13 is first adjusted according to the length and type of pet hair, so that the cutter head module 70 is in the most suitable pattern.

Then, the pet shaver 100 is started through the switch module 80. Of course, the pet shaver 100 can also be started first through the switch module 80, and then the structure of the cutter head module 70 can be adjusted as needed.

During the process of shaving pets by the cutter head module 70, the vacuum cleaner is in an open state. The shaved pet hair will be drawn into the vacuum cleaner through the air duct 20 after being shaved, thereby conveniently reducing the workload of the user, and preventing a large amount of scattered pet hair from being cleaned. It can be understood that the air duct 20 is provided close to the cutter head module 70. Specifically, the opening at the top end of the air duct 20 is provided above the cutter head module 70. When the cutter head module 70 shaves the pet hair, the pet hair can be smoothly collected into the vacuum cleaner through the air duct 20.

The pet shaver 100 provided by the present invention is capable of absorbing the shaved hair while shaving the pet, preventing a large amount of hair from scattering, and reducing the workload of the user.

The specific embodiments of the present invention enable those skilled in the art to understand or implement the present invention. Various modifications to these embodiments will be apparent to those skilled in the art. The general principles defined herein may be implemented in other embodiments without departing from the scope of the present invention. Therefore, the present invention will not be limited to the embodiments shown herein, but should conform to the widest scope consistent with the principles and novel features of the present disclosure herein.

## Claims

1. A pet shaver (100), comprising an outer shell (10), a cutter head module (70) is provided at a top end of the outer shell (10), an air duct (20), and a connecting device (30), the pet shaver (100) being **characterized by**: the outer shell (10) has an accommodating space, a bottom end of the outer shell (10) is connected to the connecting device (30), the air duct (20) is accommodated in the accommodating space, the air duct (20) has a sealed structure other than two openings at both ends thereof, and one of the openings of the air duct (20) is close to the cutter head (70), the other one of the openings of the air duct (20) is communicated with the connecting device (30).

2. The pet shaver (100) according to claim 1, wherein the outer shell (10) comprises an upper shell (11) and a lower shell (12), the upper shell (11) is connected to the lower shell (12), and the upper shell (11) and the lower shell (12) are combined to form the accommodating space.

3. The pet shaver (100) according to claim 2, wherein the bottom end of the upper shell (11) has an opening (111), and in the assembled state, the bottom end of the air duct (20) extends through the opening (111) to connect to the connecting device.

4. The pet shaver (100) according to claim 2, wherein the air duct (20) and the upper shell (11) are of an integrated structure.

5. The pet shaver (100) according to claim 3, wherein the connecting device (30) comprises an abutment plate (31) and a connecting part (32) connected to the abutment plate (31), the abutment plate (31) is abutted against the outer shell (10), and the connecting part (32) is connected with a vacuum cleaner and is communicated with the air duct (20).

6. The pet shaver (100) according to claim 5, wherein the abutment plate (31) has a communication hole (311), the communication hole (311) is provided corresponding to the opening (111) at the bottom end of the upper shell (11) in the assembled state, and the air duct (20) extends through the opening (111) at the bottom end of the upper shell (10) and the communication hole (311) to communicate with the connecting part (32).

7. The pet shaver (100) according to claim 1, further comprising a power module (60) and a control module (40), wherein the control module (40) is electrically connected to the power module (60), the power module (60) is connected to the cutter head module (70) through a transmission part and is capable of driving the cutter head module (70) to move .

8. The pet shaver (100) according to claim 7, further comprising a power supply module (50), wherein the power supply module (50) is electrically connected to the control module (40) and provides electric energy to the pet shaver (100).

9. The pet shaver (100) according to claim 8, further comprising a switch module (80), wherein the switch module (80) is electrically connected to the control module (40).

10. The pet shaver (100)according to claim 9, wherein the switch module (80) is spaced from the power supply module (50) by the air duct (20).

## Patentansprüche

1. Rasierapparat für Haustiere (100), der eine Außenschale (10), ein Schneidkopfmodul (70) am oberen Ende der Außenschale (10) hat, eine Luftleitung (20) und eine Verbindungsvorrichtung (30), wobei der Rasierapparat für Haustiere (100) **dadurch gekennzeichnet ist, dass**: die Außenschale (10) einen Aufnahmeraum aufweist, ein unteres Ende der Außenschale (10) mit der Verbindungsvorrichtung (30) verbunden ist, die Luftleitung (20) in dem Aufnahmeraum untergebracht ist, die Luftleitung (20) eine andere abgedichtete Struktur als zwei Öffnungen an ihren beiden Enden aufweist, und eine der Öffnungen der Luftleitung (20) sich in der Nähe des Schneidkopfes (70) befindet, die andere der Öffnungen der Luftleitung (20) mit der Verbindungsvorrichtung (30) verbunden ist.

2. Rasierapparat für Haustiere (100) nach Anspruch 1, wobei die Außenschale (10) eine obere Schale (11) und eine untere Schale (12) umfasst, die obere Schale (11) mit der unteren Schale (12) verbunden ist, und die obere Schale (11) und die untere Schale (12) kombiniert sind, um den Aufnahmeraum zu bilden.

3. Rasierapparat für Haustiere (100) nach Anspruch 2, wobei das untere Ende der oberen Schale (11) eine Öffnung (111) aufweist und sich das untere Ende des Luftleitung (20) im zusammengebauten Zustand durch die Öffnung (111) erstreckt, um eine Verbindung mit der Anschlussvorrichtung herzustellen.

4. Rasierapparat für Haustiere (100) nach Anspruch 2, wobei die Luftleitung (20) und die obere Schale (11) eine integrierte Struktur aufweisen.

5. Rasierapparat für Haustiere (100) nach Anspruch 3, wobei die Verbindungsvorrichtung (30) eine Anschlagplatte (31) und ein mit der Anschlagplatte (31) verbundenes Verbindungsteil (32) umfasst, wobei die die Anschlagplatte (31) an der Außenschale (10) anliegt und das Verbindungsteil (32) mit einem Staubsauger mit einem Staubsauger verbunden ist und mit dem Luftleitung (20) in Verbindung steht.

6. Rasierapparat für Haustiere (100) nach Anspruch 5, wobei die Anschlagplatte (31) ein Verbindungsloch (311) aufweist, das Verbindungsloch (311) entsprechend der Öffnung (111) am unteren Ende der oberen Schale (11) im zusammengebauten Zustand vorgesehen ist und der Luftleitung (20) sich durch die Öffnung (111) am unteren Ende der oberen Schale (10) und das Verbindungsloch (311) erstreckt, um mit dem Verbindungsteil (32) zu kommunizieren.

7. Rasierapparat für Haustiere (100) nach Anspruch 1, ferner umfassend ein Leistungsmodul (60) und ein Steuermodul (40), wobei das Steuermodul (40) elektrisch mit dem Leistungsmodul (60) verbunden ist, das Leistungsmodul (60) mit dem Schneidkopfmodul (70) durch ein Übertragungsteil verbunden ist und in der Lage ist, das Schneidkopfmodul (70) zu bewegen.

8. Rasierapparat für Haustiere (100) nach Anspruch 7, ferner umfassend ein Stromversorgungsmodul (50), wobei das Stromversorgungsmodul (50) elektrisch mit dem Steuermodul (40) verbunden ist und den Rasierapparat für Haustiere (100) mit elektrischer Energie versorgt.

9. Rasierapparat für Haustiere (100) nach Anspruch 8, ferner umfassend ein Schaltmodul (80), wobei das Schaltmodul (80) elektrisch mit dem Steuermodul verbunden ist und den Rasierapparat für Haustiere (100) mit elektrischer Energie versorgt.

10. Rasierapparat für Haustiere (100) nach Anspruch 9, wobei das Schaltmodul (80) von der Luftleitung (20) von dem Stromversorgungsmodul (50) beabstandet ist.

## Revendications

1. Rasoir pour animaux de compagnie (100), comprenant une coque extérieure (10), un module de tête de coupe (70) étant prévu à une extrémité supérieure de la coque extérieure (10), un conduit d'air (20) et un dispositif de connexion (30), le rasoir pour animaux de compagnie (100) étant **caractérisé par** : la coque extérieure (10) a un espace de logement, une extrémité inférieure de la coque extérieure (10) est connectée au dispositif de connexion (30), le conduit d'air (20) est logé dans l'espace de logement, le conduit d'air (20) a une structure étanche à part deux ouvertures à ses deux extrémités, et l'une des ouvertures du conduit d'air (20) est proche de la tête de coupe (70), l'autre des ouvertures du conduit d'air le conduit (20) est en communication avec le dispositif de connexion (30).

2. Rasoir pour animaux de compagnie (100) selon la revendication 1, la coque extérieure (10) comprenant une coque supérieure (11) et une coque inférieure (12), la coque supérieure (11) étant connectée à la coque inférieure (12), et la coque supérieure (11) et la coque inférieure (12) étant combinées pour former l'espace de logement.

3. Rasoir pour animaux de compagnie (100) selon la revendication 2, l'extrémité inférieure de la coque supérieure (11) ayant une ouverture (111), et, à l'état assemblé, l'extrémité inférieure du conduit d'air (20) s'étendant traversant avec l'ouverture (111) pour se connecter au dispositif de connexion.

4. Rasoir pour animaux de compagnie (100) selon la revendication 2, dans lequel le conduit d'air (20) et la coque supérieure (11) sont d'une structure intégrée.

5. Rasoir pour animaux de compagnie (100) selon la revendication 3, le dispositif de connexion (30) comprenant une plaque de butée (31) et une pièce de connexion (32) connectée à la plaque de butée (31), la plaque de butée (31) étant en butée contre l'enveloppe extérieure (10), et la pièce de connexion (32) étant connectée à un aspirateur et communiquant avec le conduit d'air (20).

6. Rasoir pour animaux de compagnie (100) selon la revendication 5, la plaque de butée (31) ayant un trou de communication (311), le trou de communication (311) étant prévu en correspondance avec l'ouverture (111) à l'extrémité inférieure de la coque supérieure (11) à l'état assemblé, et le conduit d'air (20) s'étendant à travers l'ouverture (111) à l'extrémité inférieure de la coque supérieure (10) et du trou de communication (311) pour communiquer avec la partie de connexion (32).

7. Rasoir pour animaux de compagnie (100) selon la revendication 1, comprenant en outre un module d'alimentation (60) et un module de commande (40), le module de commande (40) étant connecté électriquement au module d'alimentation (60), le module d'alimentation (60) étant connecté au module de tête de coupe (70) par l'intermédiaire d'une partie de transmission et étant capable d'entraîner le module de tête de coupe (70) en mouvement.

8. Rasoir pour animaux domestiques (100) selon la revendication 7, comprenant en outre un module d'alimentation électrique (50), le module d'alimentation électrique (50) étant connecté électriquement au module de commande (40) et fournissant de l'énergie électrique au rasoir pour animaux domestiques (100).

9. Rasoir pour animaux de compagnie (100) selon la revendication 8, comprenant en outre un module de commutation (80), le module de commutation (80) étant connecté électriquement au module de commande (40).

10. Rasoir pour animaux de compagnie (100) selon la revendication 9, le module de commutation (80) étant espacé du module d'alimentation (50) par le conduit d'air (20).
